# EUROPÄISCHE PATENTSCHRIFT

(11) **EP 4 049 523 B1**
(45) Veröffentlichungstag und Bekanntmachung des Hinweises auf die Patenterteilung: **29.01.2025**
(21) Anmeldenummer: 22401003.3
(22) Anmeldetag: 14.02.2022
(51) Int. Cl.: A01C 7/10, A01C 7/20

(54) **VERFAHREN ZUM BERÜHRUNGSFREIEN ERFASSEN VON GRANULAREM MATERIAL INNERHALB EINER LANDWIRTSCHAFTLICHEN VERTEILMASCHINE**
METHOD FOR CONTACTLESS SENSING OF GRANULAR MATERIAL WITHIN AN AGRICULTURAL SPREADER
PROCÉDÉ DE DÉTECTION SANS CONTACT DE MATÉRIAU GRANULAIRE DANS UNE MACHINE DE DISTRIBUTION AGRICOLE

(30) Priorität: 25.02.2021 DE 102021104531
(43) Veröffentlichungstag der Anmeldung: 31.08.2022
(60) Teilanmeldung: 24219071.8
(73) Patentinhaber: Amazonen-Werke H. Dreyer SE & Co. KG, 49205 Hasbergen (DE)
(72) Erfinder: Wien, Thomas, 28816 Stuhr (DE); Bulmahn, Simon, 26655 Westerstede (DE); Radeke, Jan Philipp, 27211 Bassum (DE)

(56) Entgegenhaltungen:
- EP-A1- 1 557 078
- CA-A1- 2 291 321
- DE-A1- 102004 045 655
- US-A- 4 307 390
- US-A- 5 650 609
- US-A1- 2018 255 698
- US-B1- 6 332 413
- US-B2- 9 043 950

## Beschreibung

Die Erfindung betrifft ein Verfahren zum berührungsfreien Erfassen von granularem Material gemäß dem Oberbegriff des Patentanspruches 1 und eine landwirtschaftliche Verteilmaschine zum Ausbringen von granularem Material gemäß des Patentanspruches 3.

Ein entsprechendes Verfahren ist aus den Druckschriften US 4 307 390 A oder US 5 650 609 A bekannt.

Auf dem Gebiet der Landwirtschaft sind eine Vielzahl unterschiedlicher Varianten von Verteilmaschinen zum Ausbringen von granularem Material, insbesondere Saatgut und/oder Dünger, bekannt. Hierzu zählen neben pneumatischen und/oder mechanischen Sämaschinen auch Einzelkornsämaschinen, die dazu geeignet sind, das granulare Material auf einer landwirtschaftlichen Nutzfläche abzulegen. Derartige Verteilmaschinen weisen darüber hinaus neben wenigstens einem Vorratsbehälter zumindest eine Förderleitung auf, über die das granulare Material bedarfsgerecht bzw. in einstellbaren Mengen wenigstens einem nachgeordneten Ausbringorgan zubringbar ist.

Innerhalb gattungsgemäßer Verteilmaschinen werden vermehrt elektronische Vorrichtungen zur Materialerfassung, insbesondere Kornerfassung, eingesetzt, welche entlang einer Förder- und/oder Dosierstrecke der Verteilmaschinen angeordnet sind. Mittels derartiger elektronischer Vorrichtungen lässt sich unter anderem die Menge, insbesondere Anzahl, und/oder der Abstand des ausgebrachten und/oder abgelegten granularen Materials, insbesondere der einzelnen Körner, vergleichsweise präzise erfassen und/oder ermitteln.

Eine derartige elektronische Vorrichtung zum Erfassen von granularem Material, insbesondere Saatgut und/oder Dünger, ist beispielsweise in der DE 20 2004 003 702 A1 beschrieben. Die hier beschriebene elektronische Vorrichtung umfasst zumindest eine im Querschnitt gesehen wenigstens abschnittsweise rund ausgebildete Förderleitung, durch die das granulare Material in einstellbaren Mengen und in einer Förderrichtung mittels Druckdifferenz und/oder Schwerkraft förderbar ist. Die elektronische Vorrichtung umfasst des Weiteren zumindest eine Sensoreinrichtung die dazu eingerichtet ist, das granulare Material, insbesondere in Form von vereinzelten Körnern, berührungsfrei innerhalb eines entlang der Förderleitung angeordneten Messraums der Sensoreinrichtung zu erfassen.

In der Praxis hat sich jedoch herausgestellt, dass die Präzision und/oder Zuverlässigkeit derartiger elektronischer Vorrichtungen mit zunehmender Betriebsdauer beeinflusst wird. Dies kann beispielsweise durch einen Kontakt des granularen Materials mit der elektronischen Vorrichtung, insbesondere der Sensoreinrichtungen, und/oder durch Verschmutzungen im Bereich des Messraums hervorgerufen werden.

Um den, insbesondere negativen, Einfluss von granularem Material, insbesondere einzelner Körner, und/oder von Verschmutzungen auf die elektronische Vorrichtung, insbesondere Sensoreinrichtung, zu verringern, sind elektronische Vorrichtungen zum Erfassen von granularem Material wie beispielsweise in der US 5 533 458 A beschrieben bekannt geworden. Demnach ist eine im Bereich des Messraums, insbesondere in Förderrichtung unmittelbar vor dem Messraum, angeordnete Kante bzw. ein angeordneter Absatz bekannt, mittels der bzw. dem das granulare Material und/oder die Verschmutzungen während der Ausbringung zumindest teilweise am Messraum, insbesondere der Sensoreinrichtung, vorbeigeführt werden.

Es hat sich jedoch gezeigt, dass mit zunehmender Betriebsdauer auch mit derartig ausgeführten elektronischen Vorrichtungen keine ausreichende Zuverlässigkeit und/oder Präzision bei der Erfassung des granularen Materials erreicht wird. Problematisch hierbei ist unter anderem der vergrößerte Bereich, insbesondere in Förderrichtung unmittelbar, hinter der Kante bzw. dem Absatz. Insbesondere aufgrund eines scharf ausgebildeten Übergangs, wird der vergrößerte Bereich des Querschnitts zumindest abschnittsweise nicht wesentlich von der mitgetragenen Luft des granularen Materials und/oder der aus der Druckdifferenz resultierenden Luftströmung durchströmt. Hierbei stellt sich eine Art Ablösung der Strömung und/oder ein Totgebiet ein, innerhalb dem sich, insbesondere feinst Partikel von, Verschmutzungen weiterhin ansammeln und die elektronische Vorrichtung, insbesondere die Sensoreinrichtung, beeinflussen können.

Die der Erfindung zugrunde liegende Aufgabe besteht somit darin, ein elektronische Vorrichtung zum Erfassen von granularem Material innerhalb einer landwirtschaftlichen Verteilmaschine so zu gestalten, dass die Betriebssicherheit derartiger elektronischer Vorrichtungen mit besonders einfachen Mitteln weiter verbessert und/oder die Präzision und/oder Zuverlässigkeit der Erfassung mit zunehmender Betriebsdauer zumindest nahezu aufrechterhalten wird. Insbesondere sollen dabei die Nachteile des beschriebenen Stands der Technik zumindest teilweise beseitigt werden.

Diese Aufgabe wird erfindungsgemäß durch die Merkmale des Anspruches 1 gelöst.

Im Folgenden bezeichnet der Begriff "Feststoffe", sofern nicht anders explizit angegeben, durch die elektronische Vorrichtung, insbesondere die Förderleitung, gefördertes Material in Form von auszubringendem granularen Material, insbesondere Saatgut und/oder Dünger, und/oder Verschmutzungen, insbesondere Staub- und/oder Schmutzpartikel. Darüber hinaus können hierunter ebenso durch die elektronische Vorrichtung, insbesondere die Förderleitung, geförderte bzw. transportierte Flüssigkeiten, beispielsweise in Form von Wasserpartikeln, und/oder Beize, insbesondere Saatgutbeize, verstanden werden.

Infolge einer vorzugsweisen Maßnahme sind sowohl die Luft bzw. Luftströmung als auch die Feststoffe in Förderrichtung vor dem Messraum, insbesondere unmittelbar vor der Sensoreinrichtung, umlenkbar. Die innerhalb der elektronischen Vorrichtung aus den Feststoffen und der Luft resultierende Mehrphasenströmung wird somit innerhalb des Übergangs zumindest teilweise, vorzugsweise unmittelbar, vor dem Messraum in Richtung eines Mittelpunktes eines Krümmungsradius des gekrümmten Abschnitts der Förderleitung umgelenkt. Insbesondere die Mehrphasenströmung im Bereich einer Innenwand der Förderleitung wird dabei beeinflusst. Mit anderen Worten wird hierdurch die Flugbahn der Feststoffe und/oder der Luft in einer Richtung von der Innenwand weg verändert. Mittels einer derartigen Ausführungsform ist somit erreicht, dass sowohl die Feststoffe als auch die Luft zum Inneren, insbesondere zu einem Zentrum des Förderleitungsquerschnitts, umgelenkt werden. Ansammlungen von Feststoffen im Bereich des Messraums, insbesondere der Sensoreinrichtung, sind somit zumindest nahezu ausgeschlossen.

Die Förderleitung ist vorzugsweise in Förderrichtung vor dem Übergang zumindest abschnittsweise oval ausgebildet. Die ovale Ausführungsform hat dabei entscheidende Vorteile in der Führung der Mehrphasenströmung, insbesondere der Feststoffe, die in überraschender Weise in einer "Beruhigung" der Mehrphasenströmung, insbesondere der geförderten Feststoffe resultiert. In einem dazu nachgeordneten Abschnitt, insbesondere innerhalb dem der Messraum angeordnet ist, ist der Querschnitt der Förderleitung zumindest nahezu rund ausgebildet. Die im Wesentlichen runde Form erlaubt eine besonders einfache und präzise Ausrichtung der Sensoreinrichtung, insbesondere einzelner zueinander zugeordneter Sensorelemente, welches für eine zuverlässige und/oder präzise Erfassung des granularen Materials besonders vorteilhaft ist.

Die Sensoreinrichtung ist hierbei besonders bevorzugt nach Art eines optischen Sensors, insbesondere Infrarot- oder Radarsensors, ausgebildet und dazu eingerichtet, das granulare Material, insbesondere in Form von vereinzelten Körnern, berührungsfrei bzw. berührungslos zu erfassen. Ferner werden bei einer bevorzugten nach Art eines Infrarotsensors ausgebildeten Sensoreinrichtung eine Mehrzahl von Sensorelementen, die insbesondere nach Art von lichtemittierenden Dioden ausgebildet sind, zueinander zugeordnet und/oder ausgerichtet in Umfangsrichtung um die Förderleitung angeordnet.

In einer bevorzugten Ausführungsform der Vorrichtung weist eine äußere und innere Innenwand der Förderleitung im Bereich des Übergangs, insbesondere am Übergang, einen ungleichen Krümmungsradius auf. Die Innenwand der Förderleitung bilden dabei die innenliegenden und mit der Mehrphasenströmung, insbesondere mit den Feststoffen, in Kontakt bringbaren Innenflächen bzw. Wandungen der Förderleitung. Die äußere Innenwand ist dabei auf einer einem Mittelpunkt des Krümmungsradius abgewandten Seite der Förderleitung angeordnet, während die innere Innenwand folglich auf einer dem Mittelpunkt des Krümmungsradius zugewandten Seite der Förderleitung angeordnet ist. Vorzugsweise ist hierbei der Krümmungsradius der äußeren Innenwand kleiner ausgebildet als der Krümmungsradius der inneren Innenwand. Alternativ oder zusätzlich kann dabei der Krümmungsradius auch zumindest nahezu gleich ausgeführt sein, wobei dabei die jeweiligen Mittelpunkte der Krümmungsradien zueinander versetzt angeordnet sind. Bei einer derartigen Ausführungsform ist der Mittelpunkt des Krümmungsradius der äußeren Innenwand zur Förderleitung hin versetzt. Infolge dessen ist die Krümmung der äußeren Innenwand im Vergleich zur inneren Innenwand zumindest innerhalb des Übergangs ausgeprägter ausgebildet. Die innere Innenwand ist vorzugsweise im Wesentlich linear, insbesondere krümmungsfrei, im Bereich des Übergangs ausgebildet, während die äußere Innenwand eine Art, insbesondere gerkrümmte, Rampe zum Inneren der Förderleitung bildet. Mit anderen Worten bildet die Förderleitung, insbesondere die äußere Innenwand, in Förderrichtung vor dem Messraum, insbesondere der Sensoreinrichtung, eine Art Überschwinger. Infolge dessen resultiert eine im Hinblick auf die eigentliche Förderrichtung des granularen Materials gerichtete Querströmung, die dazu eingerichtet ist, die Feststoffe und/oder die Luft zumindest teilweise in Richtung eines Inneren der Förderleitung, insbesondere des Querschnitts, zu fördern und/oder umzulenken.

In einer Weiterbildung der Vorrichtung ist der Übergang zumindest nahezu stufen- bzw. nahtlos ausgebildet. Insbesondere der Übergang vom zumindest im Wesentlichen ovalen zum runden Querschnitt der Förderleitung ist hierbei zumindest nahezu stufen- und/oder nahtlos ausgebildet. Mit anderen Worten ist der Übergang, insbesondere der Bereich der Förderleitung unmittelbar vor dem Messraum und/oder der Sensoreinrichtung, zumindest nahezu frei von Kanten und/oder Absätzen ausgebildet. Durch diese Ausführungsform wird zumindest nahezu der gesamte Querschnitt im Bereich der Sensoreinrichtung und/oder des Messraums von der mitgetragenen und/oder geförderten Luft durchströmt, womit Ansammlungen bzw. Anhaftungen von Feststoffen im Bereich der Sensoreinrichtung und/oder des Messraums zumindest nahezu ausgeschlossen sind.

In einer anderen bevorzugten Ausführungsform der Vorrichtung verjüngt sich der Querschnitt in Förderrichtung am Übergang. Der Übergang ist vorzugsweise nach Art einer Düse ausgebildet. Dies hat im Bereich des Übergangs einen zumindest lokalen Beschleunigungs- bzw. Düseneffekt der mitgetragenen und/oder geförderten Luft. Durch die daraus resultierenden besonders hohen Geschwindigkeiten der Luft und/oder der Feststoffe ist einer Art Selbstreinigungseffekt der Innenwände und/oder der Sensoreinrichtung erreicht.

In einer anderen Weiterbildung der Vorrichtung weist die Förderleitung zumindest einen sich an den, insbesondere gekrümmten, Übergang anschließenden und zumindest abschnittsweise linear, insbesondere krümmungsfrei, ausgebildeten Verlauf auf, wobei der Messraum vorzugsweise innerhalb des linearen, insbesondere krümmungsfreien, Verlaufs angeordnet ist. Der lineare Abschnitt ist besonders bevorzugt zumindest nahezu vollständig rund ausgebildet. An dem, vorzugsweise besonders kurz ausgebildeten, linearen bzw. zumindest nahezu krümmungsfreien Abschnitt der Förderleitung ist die Sensoreinrichtung somit besonders gut anbringbar. Insbesondere die Mehrzahl der zueinander zugeordneten und/oder ausgerichteten Sensorelemente sind so besonders einfach an der Förderleitung anbringbar. Die Zuverlässigkeit und/oder Präzision der Material- und/oder Körnererfassung ist somit in besonders einfacher Weise gesteigert.

In einer weiteren bevorzugten Ausführungsform der Vorrichtung ist entlang des wenigstens einen ovalen und/oder runden Querschnitts wenigstens eine erste Abflachung an der Förderleitung, insbesondere an der inneren und/oder äußeren Innenwand, ausgebildet. Die zumindest teilweise kreisförmige und/oder kreisbogenförmige Geometrie der Förderleitung, insbesondere des Querschnitts, weist im Querschnitt gesehen zumindest eine lineare, insbesondere zumindest nahezu ungekrümmte, Wandung auf. Derartige Abflachungen und/oder Querschnitte stellen eine besonders strömungsgünstige Form für die geförderte Luft und/oder die Feststoffe dar. Besonders bevorzugt ist gegenüberliegend zur wenigstens einen ersten Abflachung zumindest eine zweite Abflachung an der Förderleitung, insbesondere an der inneren und/oder äußeren Innenwand, ausgebildet. Die wenigstens eine zweite Abflachung ist vorzugsweise spiegelsymmetrisch zur wenigstens einen ersten Abflachung ausgebildet. Durch eine derartige Ausführungsform ist eine besonders schwankungsarme und/oder "beruhigte" Förderung der der Luft und/oder der Feststoffe, insbesondere des granularen Materials, erreicht.

Darüber hinaus ist eine Vorrichtung bevorzugt, bei der die Vorrichtung, insbesondere die Förderleitung, in Förderrichtung vor dem Messraum zumindest teilweise aus einem zumindest nahezu verschleißfesten, insbesondere metallischen, Material ausgebildet ist. Bei einer bevorzugten Ausführungsform der erfindungsgemäßen Vorrichtung ist die Förderleitung an einer Einlassöffnung und/oder am gekrümmten Abschnitt der Förderleitung aus dem zumindest nahezu verschleißfesten Material, vorzugsweise aus Metall, ausgebildet. Alternativ hierzu ist auch ein glasfaserverstärktes und/oder zumindest teilweise beschichtetes Kunststoffmaterial denkbar. Insbesondere durch den Kontakt mit den Feststoffen werden die Bereiche der Einlassöffnung und/oder des gekrümmten Abschnitts der Förderleitung besonders hoch beansprucht, wodurch diese bevorzugte Ausführungsform eine besonders hohe Betriebssicherheit gegenüber herkömmlichen Ausführungsformen erreicht.

Alternativ oder zusätzlich kann das zumindest nahezu verschleißfeste Material auch wenigstens teilweise von außen an der Förderleitung, insbesondere nach Art eines Einsatzstücks an der Einlassöffnung, angeordnet sein. Das verschleißfeste Material ist dabei bevorzugt form-, kraft- und/oder stoffschlüssig mit der Förderleitung verbunden, wobei eine zumindest teilweise eingeklebte Variante besonders bevorzugt ist. Durch das zumindest teilweise von außen angeordnete verschleißfeste Material ist insbesondere die Stoßfestigkeit der Förderleitung in diesem Bereich gegenüber, insbesondere äußeren Einwirkungen, gesteigert, wodurch eine noch höhere Betriebssicherheit der elektronischen Vorrichtung erreicht ist.

Die der Erfindung zugrunde liegende Aufgabe wird mit einem Verfahren der eingangs genannten Art gelöst. Hierbei wird das granulare Material, insbesondere Saatgut und/oder Dünger, mittels einer, insbesondere erzeugbaren, Druckdifferenz und/oder mittels Schwerkraft durch eine elektronische Vorrichtung mit zumindest einer Sensoreinrichtung gefördert. Dabei wird das granulare Material, insbesondere werden die einzelnen Körner, mittels der zumindest einen Sensoreinrichtung erfasst, wobei die Sensoreinrichtung dazu eingereicht ist, ein Sensorsignal in Abhängigkeit des erfassten Materials und auf Basis einer für die Sensoreinrichtung einstellbaren Sensitivität bzw. Empfindlichkeit zu erzeugen. Anschließend wird auf der Basis des Sensorsignals eine Ist-Frequenz ermittelt, mit der das granulare Material die elektronische Vorrichtung, insbesondere die Sensoreinrichtung, passiert.

Das erfindungsgemäße Verfahren zeichnet sich dabei dadurch aus, dass die ermittelte Ist-Frequenz mit einer abrufbaren und/oder vorgebbaren Soll-Frequenz, mit der das granulare Material durch die elektronische Vorrichtung gefördert wird, verglichen wird. Hierbei wird ferner eine Abweichung zwischen der Ist-Frequenz und der Soll-Frequenz ermittelt. Anschließend wird das Sensorsignal und/oder die Sensitivität derart angepasst, bis ein vorgebbarer Akzeptanzbereich für die Abweichung erreicht ist. Mit einer derartigen Ausführungsform werden durch Ansammlungen von Feststoffen, insbesondere Verschmutzungen, im Bereich der elektronischen Vorrichtung, insbesondere der Sensoreinrichtung, hervorgerufene Signalveränderungen zumindest teilweise, vorzugsweise zumindest nahezu vollständig, kompensiert.

Erfindungsgemäß werden das Sensorsignal und/oder die Sensitivität hierbei selbsttätig bzw. automatisiert von einem der elektronischen Vorrichtung und/oder der Verteilmaschine zugeordneten Steuer- und/oder Regelsystem angepasst.

Die Sensitivität oder Empfindlichkeit stellt hierbei ein, insbesondere Mindest-, Maß oder eine Schwelle eines Signalpegels oder Signalausschlags des Sensorsignals dar, bei dem ein an der Sensoreinrichtung vorbeigeführtes granulares Material von der elektronischen Vorrichtung, insbesondere Sensoreinrichtung, erfasst wird. Somit reichen bei hoher Sensitivität vergleichsweise geringe Signalpegel oder Ausschläge zur Erfassung von granularem Material, insbesondere einzelner Körner, während bei niedriger Sensitivität vergleichsweise hohe Signalpegel oder Ausschläge zur Erfassung von granularem Material notwendig sind.

Vorzugsweise wird das erfindungsgemäße Verfahren innerhalb eines turnusmäßigen, insbesondere täglichen und/oder jährlichen, Kalibriervorgangs ausgeführt. Alternativ oder zusätzlich kann ein derartiger Kalibriervorgang auch während einer Unterbrechung des Ausbringvorgangs und/oder vor Beginn der Ausbringung ausgeführt werden. Die Soll-Frequenz wird bevorzugt auf der Basis zumindest einer Umgebungsbedingung, des auszubringenden granularen Materials und/oder des Betriebszustands der Verteilmaschine ermittelt und/oder vorgegeben. Alternativ oder zusätzlich wird die Soll-Frequenz innerhalb eines Modellversuchs bestimmt und/oder angepasst. Bei einem derartigen Modellversuch kann die Soll-Frequenz unter Einsatz von Modell- bzw. Testmaterialien, wie beispielsweise Stahl-, Holzkörper oder dergl. anstelle des auszubringenden Materials, ermittelt und/oder bestimmt werden. Ferner wird die Soll-Frequenz auf Basis zumindest einer hinterlegbaren Funktionskurve ermittelt und/oder abgerufen.

In einer bevorzugten Ausführungsform des erfindungsgemäßen Verfahrens wird das Sensorsignal mittels einer variabel regelbaren elektronischen Signalverstärkung angepasst. Infolge von erfasstem Material und der daraufhin von der elektronischen Vorrichtung, insbesondere der Sensoreinrichtung, generierte Signalpegel des Sensorsignals wird hierbei entsprechend selbsttätig erhöht oder verringert, bis die Ist-Frequenz die Soll-Frequenz zumindest nahezu, insbesondere im Rahmen des Akzeptanzbereichs, erreicht. Die Signalverstärkung ist hierbei vorzugsweise nach Art einer, insbesondere stufenweise, einstellbaren elektronischen "Lupe" ausgebildet. Der, insbesondere von der Sensoreinrichtung generierte, Signalpegel oder Signalausschlag des Sensorsignals ist hierbei bei niedriger Signalverstärkung oder Stufe geringer als bei hoher Signalverstärkung oder Stufe. Somit kann der eigentliche aufgrund eines detektierten Materials generierte Signalpegel oder Ausschlag des Sensorsignals, insbesondere je nach eingestellter Stufe, um ein vielfaches erhöht werden.

Für das erfindungsgemäße Verfahren wird eine anpassbare elektrische Stromversorgung für die zumindest eine Sensoreinrichtung bereitgestellt, wobei eine Helligkeit einer der Sensoreinrichtung zugeordneten Lichtquelle zur Erfassung des granularen Materials in Abhängigkeit der Stromversorgung anpassbar ist. Die Lichtquelle kann hierbei alternativ oder zusätzlich teil eines als Licht-emittierende Diode ausgeführten Sensorelements ausgebildet sein.

Beim erfindungsgemäßen Verfahren wird die elektrische Stromversorgung selbsttätig erhöht oder verringert, bis der Akzeptanzbereich für die Abweichung erreicht ist. Insbesondere eine Verdunkelung des Messraums durch Ansammlungen von Feststoffen im Bereich der Sensoreinrichtung, insbesondere der Lichtquelle, wird so mittels einer Erhöhung der, insbesondere elektrischen Leistung, der Stromversorgung der wenigstens einen Lichtquelle kompensiert. Ein gegenüber eines Ausgangszustands des Sensorsignals mit zunehmender Betriebsdauer, insbesondere Verschmutzung, verändertes Sensorsignal ist somit durch eine Veränderung der Stromversorgung in Richtung des Ausgangszustands anpassbar. Vorzugsweise wird bei einem hohen oder zunehmenden Verschmutzungsgrad der Sensoreinrichtung die Stromversorgung, insbesondere die elektrische Leistung, für die Sensoreinrichtung, insbesondere die Lichtquelle, erhöht.

In einer besonders bevorzugten Weiterbildung des erfindungsgemäßen Verfahrens ist die elektronische Vorrichtung nach zumindest einem der vorgenannten Ausführungsformen der erfindungsgemäßen elektronischen Vorrichtung zur Erfassung des granularen Materials innerhalb der landwirtschaftlichen Verteilmaschine ausgebildet.

Die der Erfindung zugrunde liegende Aufgabe wird ferner durch eine landwirtschaftliche Verteilmaschine, insbesondere Sämaschine, der eingangs genannten Art gelöst, wobei die Verteilmaschine, insbesondere ein der Verteilmaschine zugeordnetes Steuer- und/oder Regelsystem, dazu eingerichtet ist, das erfindungsgemäße Verfahren nach zumindest einem der vorgennannten Ausführungsformen auszuführen.

Bei einer besonders bevorzugten Ausführungsform der erfindungsgemäßen Verteilmaschine ist die elektronische Vorrichtung zur Erfassung des granularen Materials nach zumindest einer der vorgenannten Ausführungsformen der elektronischen Vorrichtung zur Erfassung des granularen Materials ausgebildet.

Weitere Einzelheiten der Erfindung sind der Beispielsbeschreibung und den Zeichnungen zu entnehmen. Die Zeichnungen zeigen
- Fig.1: eine erfindungsgemäße landwirtschaftliche Verteilmaschine mit nebeneinander angeordneten Säaggregaten in perspektivischer Ansicht von hinten;
- Fig.2A: eine Schnittansicht von der Seite eines Säaggregats mit einer Dosiervorrichtung;
- Fig.2B: die Dosiervorrichtung aus Fig.2A mit einer erfindungsgemäßen elektronischen Vorrichtung in vergrößerter Schnittansicht;
- Fig.3A: eine vergrößerte schematische Schnittansicht der elektronischen Vorrichtung aus der Fig.2B;
- Fig.3B: ein vergrößerter Ausschnitt der elektronischen Vorrichtung aus Fig.3A;
- Fig.3C: ein Querschnitt einer Förderleitung der elektronischen Vorrichtung im Schnitt I-I;
- Fig.3D: ein Querschnitt der Förderleitung im Schnitt II-II;
- Fig.3E: eine weitere schematische Schnittansicht der elektronischen Vorrichtung aus der Fig.3A; und
- Fig.4: ein erfindungsgemäßes Verfahren zur Erfassung von granularem Material in einem schematischen Ablaufdiagramm.

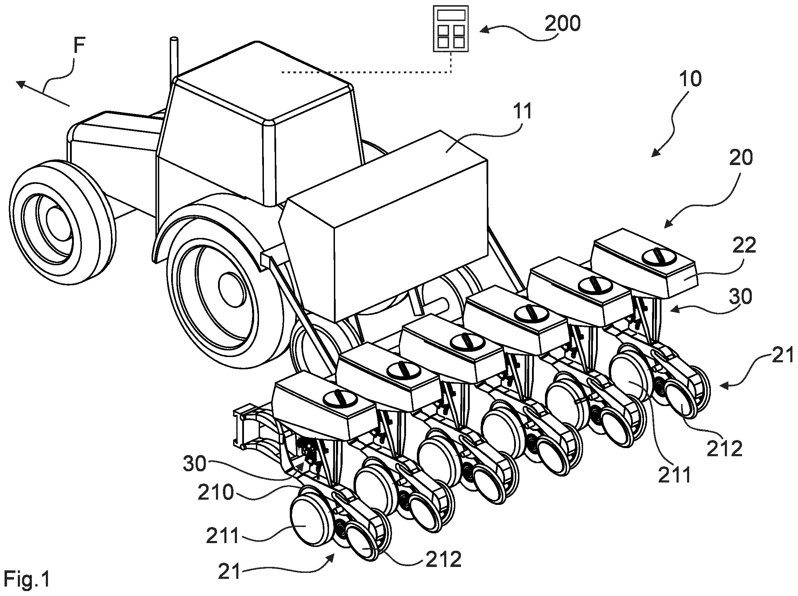

Eine als gezogene Sämaschine, insbesondere Einzelkornsämaschine, ausgebildete landwirtschaftliche Verteilmaschine 10 zum Ausbringen von granularem Material G, insbesondere Saatgut und/oder Dünger, ist in der Fig.1 gezeigt. Die Verteilmaschine 10 weist wenigstens einen Bevorratungsspeicher 11 und einen horizontal quer zur Fahrtrichtung F ausgerichteten Rahmen auf. Mittels Tragelementen sind an dem Rahmen mehrere Säaggregate 20 befestigt.

Ein jeweiliges Säaggregat 20 weist einen Vorratsbehälter 22 zur Bevorratung des auszubringenden granularen bzw. körnigen Materials G auf. Der untere Bereich des Vorratsbehälters 22 ist als Auslaufbereich ausgestaltet, in welchem wenigstens eine Auslauföffnung angeordnet ist. Über die Auslauföffnung wird das auszubringende Material G einer als Vereinzelungsvorrichtung ausgebildeten Dosiervorrichtung 30 zugebracht, welche unterhalb des Vorratsbehälters 22 angeordnet ist.

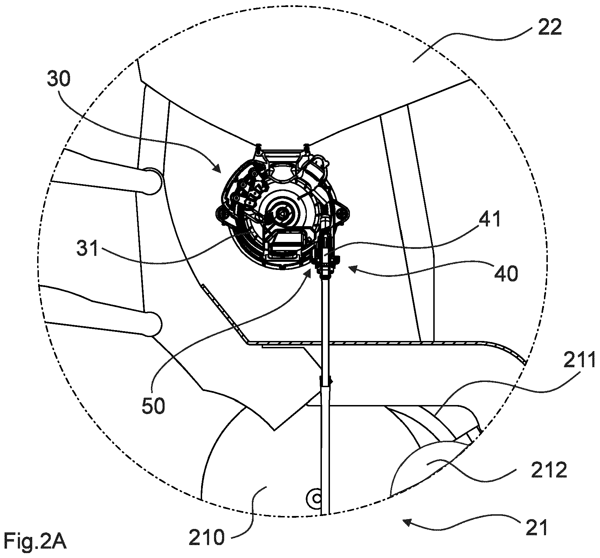

Die Dosiervorrichtung 30, in vergrößerter Schnittansicht in Fig.2A zu sehen, ist nach Art einer Überdruckvereinzelung ausgebildet und dazu eingerichtet, das zubringbare Material G bedarfsgerecht und/oder in einstellbaren Mengen, insbesondere in Form vereinzelter Körner, zu dosieren. Hierzu ist innerhalb der Dosiervorrichtung 30 ein um eine Drehachse rotatorisch antreibbares, insbesondere zumindest teilweise rotationssymmetrisch ausgebildetes, Vereinzelungselement 31 angeordnet. Das Vereinzelungselement 31 ist hierbei zumindest teilweise als kreisförmige Scheibe ausgebildet. Alternativ zur dargestellten Ausführungsform kann das Vereinzelungselement 31 auch zumindest teilweise trommel- oder zylinderartig ausgebildet sein. Ferner kann die Dosiervorrichtung 30 alternativ auch als Unterdruckvereinzelung ausgebildet sein. Darüber hinaus ist alternativ oder zusätzlich denkbar, dass das granulare Material G zumindest teilweise mittels Schwerkraft aus dem Vorratsbehälter 31 und/oder durch die Dosiervorrichtung 30 förderbar ist.

Das granulare Material G wird hierbei zumindest teilweise in einer Rotationsrichtung von dem Vereinzelungselement 31 transportiert und/oder mitgetragen und an eine nachgeordnete und/oder an der Dosiervorrichtung 30 angeordnete elektronische Vorrichtung 40 ausgegeben und/oder übergeben. Das granulare Material G wird anschließend durch die elektronische Vorrichtung 40 gefördert und an einer definierten Position an ein Ausbringorgan 21 übergeben. Das Ausbringorgan 21 umfasst als Scheibenschare ausgebildete Furchenöffnungselemente 210, Tiefenführungselemente 211 sowie Vorrichtungen 212 zum Schließen einer Furche.

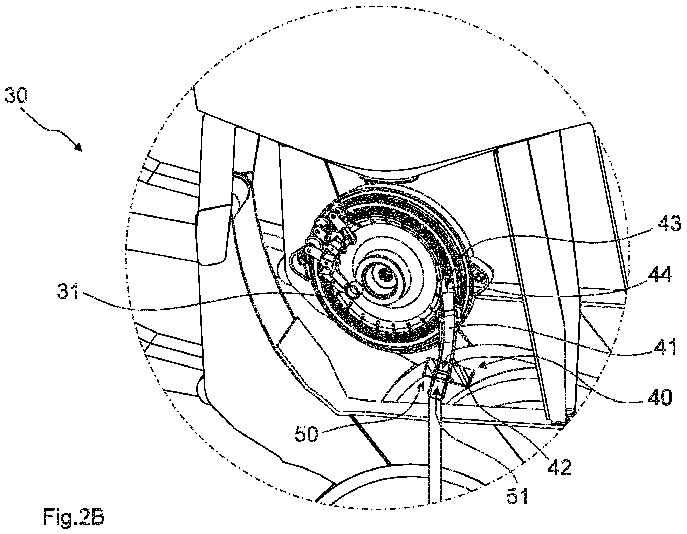

Die in der Fig.2B in näherer Ansicht gezeigte elektronische Vorrichtung 40 ist nach Art eines Optogebers ausgebildet und dazu eingerichtet, das durch die landwirtschaftliche Verteilmaschine 10 geförderte Material G zu erfassen. Hierbei umfasst die elektronische Vorrichtung 40 zumindest eine im Querschnitt gesehen wenigstens abschnittsweise rund ausgebildete Förderleitung 41, durch die das granulare Material G, insbesondere je nach Ausführungsform der Dosiervorrichtung 30, mittels einer Durckdifferenz und/oder Schwerkraft gefördert wird. Ferner umfasst die elektronische Vorrichtung 40 zumindest eine Sensoreinrichtung 50, die dazu eingerichtet ist, das granulare Material G, insbesondere in Form von vereinzelten Körnern, berührungsfrei innerhalb eines entlang der Förderleitung 41 angeordneten Messraums 51 der Sensoreinrichtung 50 zu erfassen.

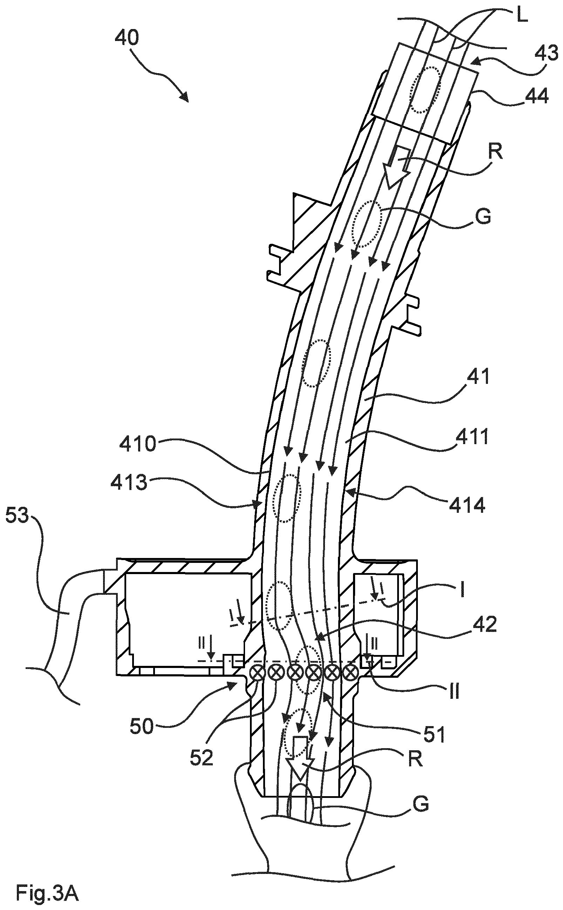

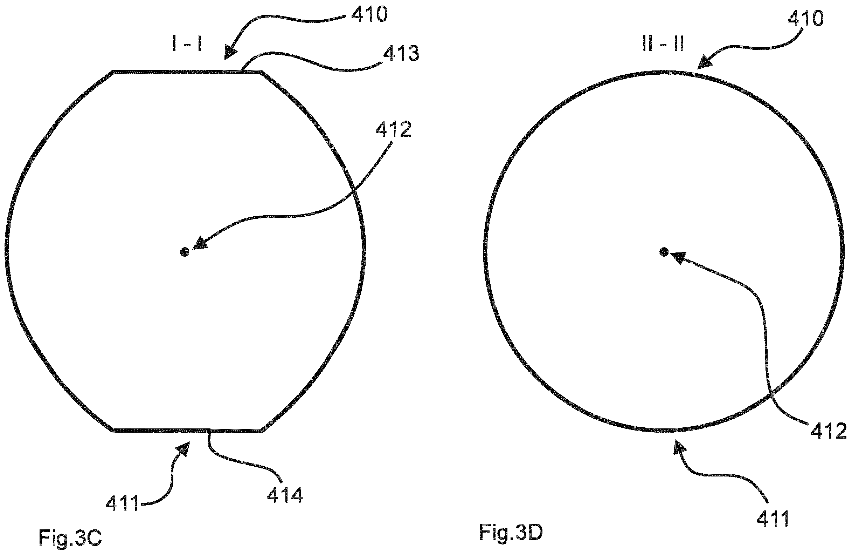

Wie in der Fig.3A besser zu sehen, ist die Förderleitung 41 wenigstens abschnittsweise gekrümmt ausgebildet. Die Förderleitung 41 weist ferner einen Übergang 42 auf, der in einer Förderrichtung R von einem im Wesentlichen ovalen Querschnitt I zu einem zumindest nahezu runden Querschnitt II verändert ist, wie insbesondere die Fig.3C und 3D zeigen. Der Übergang 42 ist dem Messraum 51, insbesondere unmittelbar, vorgeordnet und dazu eingerichtet, die Luft L, hier schematisch anhand von Stromlinien gezeigt, und/oder das granulare Material G zumindest teilweise zum inneren 412 der Förderleitung 41 umzulenken.

Neben der Luft L und/oder dem granularen Material G werden so auch innerhalb der Förderleitung geförderte Verschmutzungen, beispielsweise in Form von Staubpartikeln, Flüssigkeiten und/oder Beize, umgelenkt. Eine Ansammlung derartiger Verschmutzungen innerhalb des Messraums 51, insbesondere der Sensoreinrichtung 50, wird somit zumindest nahezu ausgeschlossen.

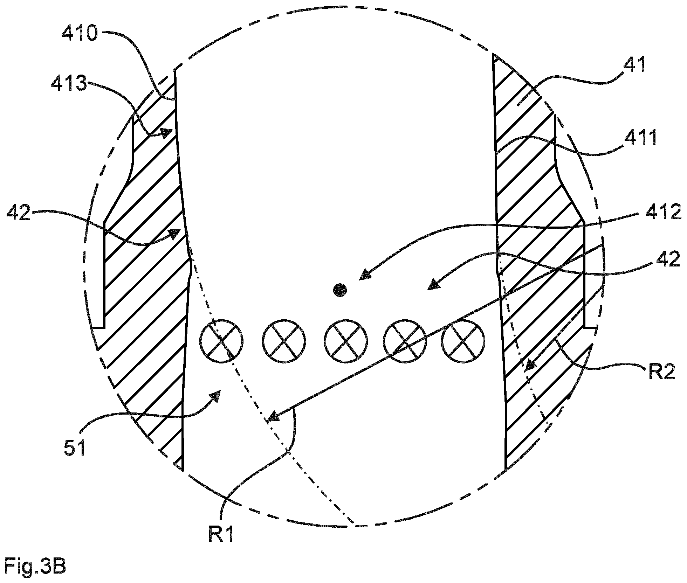

Der Übergang 42 ist hierbei zumindest nahezu stufen- bzw. nahtlos ausgebildet und verjüngt sich am Übergang 42 in Förderrichtung R. Ein vergrößerter Ausschnitt der Förderleitung 41, bei dem der Übergang 42 und der Messraum 51 besonders gut zu sehen ist, ist in der Fig.3B gezeigt.

Des Weiteren weist die Förderleitung 41 zumindest einen sich an den, insbesondere gekrümmten, Übergang 42 anschließenden und zumindest abschnittsweise linear bzw. zumindest nahezu ungekrümmt ausgebildeten Verlauf auf, wobei der Messraum 51 insbesondere innerhalb des linearen Verlaufs angeordnet ist.

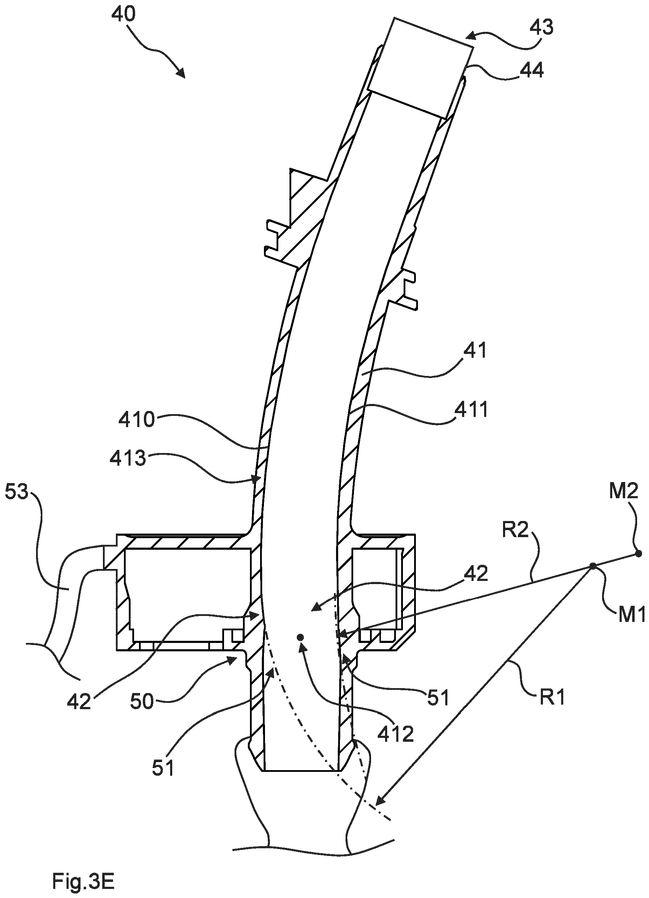

Die Förderleitung 41 wird aus zumindest einer äußeren und inneren Innenwand 410, 411 gebildet. Die äußere und innere Innenwand 410, 411 der Förderleitung 41 weisen dabei im Bereich des Übergangs 42, insbesondere am Übergang 42, einen ungleichen Krümmungsradius R1, R2 auf, wie in der Fig.3E deutlich zu sehen ist. Die äußere Innenwand 410 ist hierbei auf einer einem Mittelpunkt M1, M2 des Krümmungsradius R1, R2 abgewandten Seite der Förderleitung 41 angeordnet, während die innere Innenwand 411 folglich auf einer dem Mittelpunkt M1,M2 des Krümmungsradius R1, R2 zugewandten Seite der Förderleitung 41 angeordnet ist. Der Krümmungsradius R1 der äußeren Innenwand 410 ist hierbei kleiner ausgebildet als der Krümmungsradius R2 der inneren Innenwand 411. Alternativ oder zusätzlich können die Krümmungsradien R1, R2 auch zumindest nahezu gleich ausgeführt sein, wobei dabei die jeweiligen Mittelpunkte M1, M2 der Krümmungsradien R1, R2 zueinander versetzt angeordnet sind. Bei der gezeigten Ausführungsform ist der Mittelpunkt M1 des Krümmungsradius R1 der äußeren Innenwand 410 zur Förderleitung 41 hin versetzt. Infolge dessen ist die Krümmung der äußeren Innenwand 410 im Vergleich zur inneren Innenwand 411 zumindest innerhalb des Übergangs 42 ausgeprägter ausgebildet. Die innere Innenwand 411 ist hierbei im Wesentlich linear, insbesondere zumindest nahezu krümmungsfrei, im Bereich des Übergangs 42 ausgebildet, während die äußere Innenwand 410 eine Art, insbesondere gerkrümmte, Rampe zum inneren 412 der Förderleitung 412 bildet. Mit anderen Worten bildet die Förderleitung 41 in Förderrichtung R vor dem Messraum 51, insbesondere der Sensoreinrichtung 50, eine Art Überschwinger. Infolge dessen resultiert eine im Hinblick auf die eigentliche Förderrichtung R des granularen Materials G gerichtete Querströmung, die dazu eingerichtet ist, das granulare Material G und/oder die Luft L zumindest teilweise in Richtung des inneren 412 der Förderleitung 41, insbesondere des Querschnitts, zu fördern und/oder umzulenken.

Darüber hinaus ist entlang des wenigstens einen ovalen und/oder runden Querschnitts I, II wenigstens eine erste Abflachung 413, 414 an der Förderleitung 41, insbesondere an der inneren und/oder äußeren Innenwand 410, 411, ausgebildet. Die zumindest teilweise kreisförmige und/oder kreisbogenförmige Geometrie der Förderleitung 41, insbesondere des ovalen Querschnitts I, weist im Querschnitt gesehen zumindest eine lineare, insbesondere zumindest nahezu ungekrümmte, Wandung auf. Derartige Abflachungen und/oder Querschnitte stellen eine besonders strömungsgünstige Form für die geförderte Luft L und/oder das granulare Material G dar. In der gezeigten beispielhaften Ausführungsform ist gegenüberliegend zur wenigstens einen ersten Abflachung 413 zumindest eine zweite Abflachung 414 an der Förderleitung 41, insbesondere an der inneren und/oder äußeren Innenwand 410, 411, ausgebildet. Die wenigstens eine zweite Abflachung 414 ist dabei spiegelsymmetrisch zur wenigstens einen ersten Abflachung 413 ausgebildet. Durch eine derartige Ausführungsform ist eine besonders schwankungsarme Förderung der Luft L und/oder des granularen Materials G erreicht.

Darüber hinaus ist die elektronische Vorrichtung 40, insbesondere die Förderleitung 41, in Förderrichtung R vor dem Messraum 51 zumindest teilweise aus einem zumindest nahezu verschleißfesten, insbesondere metallischen, Material ausgebildet. In dem gezeigten Ausführungsbeispiel ist hierzu an einer Einlassöffnung 43, insbesondere an der das granulare Material G von dem Vereinzelungselement 31 an die elektronische Vorrichtung 40 und/oder die Förderleitung 41 übergeben wird, wenigstens ein metallisches Einsatzstück 44 angeordnet. Das metallische Einsatzstück 44 ist gegenüber dem Material der Förderleitung 41 zumindest nahezu verschleißfest und/oder stoßfest ausgebildet. Alternativ zur gezeigten Ausführungsform kann die elektronische Vorrichtung 40, insbesondere die Förderleitung 41, im Bereich des gekrümmten Abschnitts, insbesondere im Bereich des Übergangs 42, zumindest teilweise aus verschleißfestem Material ausgebildet und/oder beschichtet sein.

Des Weiteren ist die in dem Ausführungsbeispiel gezeigte Sensoreinrichtung 50 nach Art eines optischen Sensors ausgebildet und dazu eingerichtet, das granulare Material G, insbesondere in Form von vereinzelten Körnern, berührungsfrei bzw. berührungslos zu erfassen. Die Sensoreinrichtung 50 umfasst dabei eine Mehrzahl am Umfang der Förderleitung 41, insbesondere im Bereich des Messraums 51 und/oder unmittelbar hinter dem Übergang 42, angeordneter Sensorelemente 52. Die Sensorelemente 52 sind hierbei nach Art von Licht emittierenden Dioden ausgebildet und zumindest teilweise zueinander zugeordnet und/oder ausgerichtet. Alternativ sind hierbei auch andere Arten von berührungslos, insbesondere über Radar- und/oder Lichtwellen, erfassende Sensoren, beispielsweise Radarsensoren, denkbar.

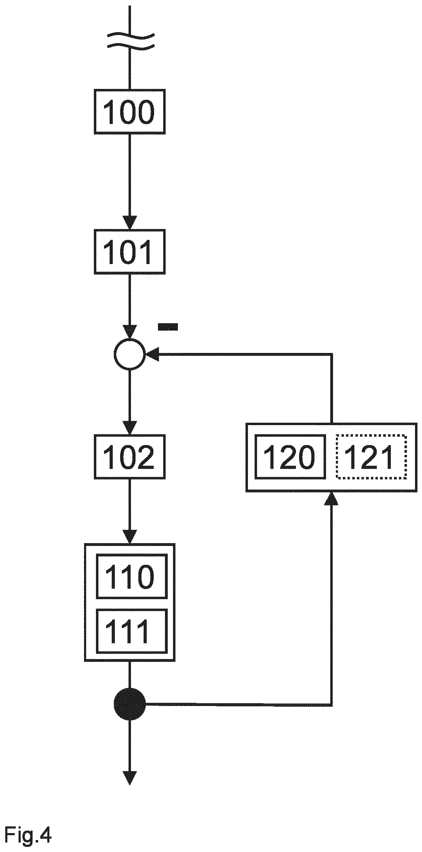

Das granulare Material G wird gemäß dem gezeigten Ausführungsbeispiel und dem schematisch dargestellten Ablaufdiagramm in Fig.4 nach dem Folgend beschriebenen Verfahren erfasst. Eingeleitet wird das Verfahren durch den nachfolgenden Schritt:
100) Fördern des granularen Materials G mittels Druckdifferenz und/oder Schwerkraft durch die elektronische Vorrichtung 40 mit der zumindest einen Sensoreinrichtung 50.

Nachdem das granulare Material G die Sensoreinrichtung 50, insbesondere die Mehrzahl von zueinander zugeordneten und/oder ausgerichteten Sensorelemente 52, passiert, wird der nachfolgende Schritt ausgeführt:
101) Erfassen des granularen Materials G mittels der zumindest einen Sensoreinrichtung 50.

Die Sensoreinrichtung 50 ist hierbei ferner dazu eingereicht, ein Sensorsignal in Abhängigkeit des erfassten Materials G und auf Basis einer für die Sensoreinrichtung 50 einstellbaren Sensitivität zu erzeugen. Das Sensorsignal wird dabei über eine elektronische Signalleitung 53 an ein der elektronischen Vorrichtung 40 und/oder der landwirtschaftlichen Verteilmaschine 10 zugeordnetes Steuer- und/oder Regelsystem 200 übermittelt.

Nachdem das Sensorsignal an das Steuer- und/oder Regelsystem 200 übertragen ist, wird der nachfolgende Schritt ausgeführt:
102) Ermitteln einer Ist-Frequenz mit der das granulare Material G die elektronische Vorrichtung 40, insbesondere die Sensoreinrichtung 50, passiert, auf der Basis des Sensorsignals.

Sobald die Ist-Frequenz ermittelt ist, werden erfindungsgemäß die nachfolgenden Schritte ausgeführt:
110) Vergleichen der ermittelten Ist-Frequenz mit einer abrufbaren und/oder vorgebbaren Soll-Frequenz mit der das granulare Material G durch die elektronische Vorrichtung 40 gefördert wird; und
111) Ermitteln einer Abweichung zwischen der Ist-Frequenz und der Soll-Frequenz.

Sobald eine Abweichung ermittelt wird, die nicht innerhalb eines abrufbaren und/oder vorgebbaren Akzeptanzbereichs liegt, wird der nachfolgende Schritt ausgeführt:
120) Selbsttätiges Anpassen des Sensorsignals und/oder der Sensitivität bis der vorgebbare Akzeptanzbereich für die Abweichung erreicht ist.

Dieser Schritt kann erfindungsgemäß dadurch ergänzt werden, dass zur Anpassung des Sensorsignals, das Sensorsignal mittels einer variabel regelbaren elektronischen Signalverstärkung verändert wird. Die Funktionsweise der elektronischen Signalverstärkung entspricht dabei einer Art elektronischen, insbesondere stufenweise verstellbaren, Lupe. Somit kann der infolge des erfassten granularen Materials G generierte Signalpegel des Sensorsignals entsprechend korrigiert und/oder angepasst werden, so dass die ermittelte ist-Frequenz in Richtung der Soll-Frequenz verändert wird.

In einem zusätzlichen Schritt 121) ist der Sensoreinrichtung 50, insbesondere den Sensorelementen 52, eine anpassbare elektrische Stromversorgung bereitgestellt werden. Die Sensoreinrichtung 50, insbesondere wenigstens ein Sensorelemente 52, ist hierbei nach Art einer Lichtquelle ausgebildet. In einer alternativen Ausführungsform kann der Sensoreinrichtung 50 auch eine alternative und/oder zusätzliche Lichtquelle zugeordnet sein. Die Lichtquelle generiert hierbei innerhalb der Förderleitung 41, insbesondere innerhalb des Messraums 51, eine Helligkeit, die dazu dient, dass das granulare Material G von der Sensoreinrichtung 50 erfasst wird. Die Helligkeit ist hierbei entsprechend in Abhängigkeit der Stromversorgung anpassbar, wobei die Ermittlung der Ist-Frequenz von der Helligkeit beeinflusst wird. Die elektrische Stromversorgung wird somit entsprechend selbsttätig erhöht oder verringert, bis der Akzeptanzbereich für die Abweichung erreicht ist.

Die beschriebenen Schritte werden hierbei insbesondere innerhalb eines turnusmäßigen Kalibriervorgangs der elektronischen Vorrichtung 40, vorzugsweise zumindest teilweise automatisiert durch das Steuer- und/oder Regelsystem 200, ausgeführt. Der Kalibriervorgang kann hierbei beispielsweise jährlich, täglich oder während einer Unterbrechung des Ausbringvorgangs ausgeführt werden. Alternativ oder zusätzlich ist auch denkbar, dass der Kalibriervorgang der elektronischen Vorrichtung 40 auch zumindest nahezu zeitlich übereinstimmend und/oder simultan mit der Ausbringung erfolgt.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 10: landwirtschaftliche Verteilmaschine
- 11: Bevorratungsspeicher
- 20: Säaggregat
- 21: Ausbringorgan
- 210: Furchenöffnungselemente
- 211: Tiefenführungselemente
- 212: Vorrichtung zum Schließen einer Furche
- 22: Vorratsbehälter
- 30: Dosiervorrichtung
- 31: Vereinzelungselement
- 40: elektronische Vorrichtung
- 41: Förderleitung
- 410: äußere Innenwand
- 411: innere Innenwand
- 412: Inneres der Förderleitung
- 413: erste Abflachung
- 414: zweite Abflachung
- 42: Übergang
- 43: Einlassöffnung
- 44: metallisches Einsatzstück
- 50: Sensoreinrichtung
- 51: Messraum
- 52: Sensorelemente
- 53: Signalleitung
- 200: Steuer- und/oder Regelsystem

- F: Fahrtrichtung
- G: granulares Material
- I: ovaler Querschnitt
- II: runder Querschnitt
- L: Luft, Strömung
- M1, M2: Mittelpunkt des Krümmungsradius
- R: Förderrichtung
- R1, R2: Krümmungsradius

## Patentansprüche

1. Verfahren zum berührungsfreien Erfassen von granularem Material (G) innerhalb einer landwirtschaftlichen Verteilmaschine (10), mit den Schritten:
- Fördern des granularen Materials (G) mittels Druckdifferenz und/oder Schwerkraft durch eine elektronische Vorrichtung (40) mit zumindest einer Sensoreinrichtung (50);
- Erfassen des granularen Materials (G) mittels der zumindest einen Sensoreinrichtung (50); wobei die Sensoreinrichtung (50) dazu eingereicht ist, ein Sensorsignal in Abhängigkeit des erfassten Materials (G) und auf Basis einer für die Sensoreinrichtung (50) einstellbaren Sensitivität zu erzeugen;
- Ermitteln einer Ist-Frequenz mit der das granulare Material (G) die elektronische Vorrichtung (40), insbesondere die Sensoreinrichtung (50), passiert auf der Basis des Sensorsignals,
- Vergleichen der ermittelten Ist-Frequenz mit einer abrufbaren und/oder vorgebbaren Soll-Frequenz mit der das granulare Material (G) durch die elektronische Vorrichtung (40) gefördert wird;
- Ermitteln einer Abweichung zwischen der Ist-Frequenz und der Soll-Frequenz;
- Selbsttätiges bzw. automatisiertes Anpassen des Sensorsignals und/oder der Sensitivität bis ein vorgebbarer Akzeptanzbereich für die Abweichung erreicht ist; wobei das Sensorsignal und/oder die Sensitivität von einem der elektronischen Vorrichtung (40) und/oder der Verteilmaschine (10) zugeordneten Steuer- und/oder Regelsystem (200) angepasst wird;
**gekennzeichnet durch** den Schritt:
- Bereitstellen einer anpassbaren elektrischen Stromversorgung für die zumindest eine Sensoreinrichtung (50), wobei eine Helligkeit einer der Sensoreinrichtung (50) zugeordneten Lichtquelle zur Erfassung des granularen Materials (G) in Abhängigkeit der Stromversorgung anpassbar ist; wobei die elektrische Stromversorgung selbsttätig erhöht oder verringert wird bis der Akzeptanzbereich für die Abweichung erreicht ist.

2. Verfahren nach Anspruch 1, **dadurch gekennzeichnet, dass** das Sensorsignal mittels einer variabel regelbaren elektronischen Signalverstärkung angepasst wird.

3. Landwirtschaftliche Verteilmaschine (10), insbesondere Einzelkornsämaschine, zum Ausbringen von granularem Material (G), insbesondere Saatgut und/oder Dünger, mit einer elektronischen Vorrichtung (40) zum Erfassen von granularem Material (G) gemäß einem der vorgenannten Ansprüche 1 oder 2 und einem zugeordneten Steuer- und/oder Regelsystem (200) gemäß einem der vorgenannten Ansprüche 1 oder 2, wobei das Steuer- und/oder Regelsystem (200) dazu eingerichtet ist, das Verfahren nach zumindest einem der vorgenannten Ansprüche 1 oder 2 auszuführen.

## Claims

1. Method for contact-free detection of granular material (G) within an agricultural distribution machine (10), comprising the steps of:
- conveying the granular material (G) by means of pressure difference and/or gravity through an electronic appliance (40) which has at least one sensor device (50);
- detecting the granular material (G) by means of the at least one sensor device (50); the sensor device (50) being designed to generate a sensor signal depending on the detected material (G) and on the basis of a sensitivity which can be adjusted for the sensor device (50);
- determining an actual frequency at which the granular material (G) passes through the electronic appliance (40), in particular the sensor device (50), on the basis of the sensor signal,
- comparing the determined actual frequency with a retrievable and/or predeterminable target frequency at which the granular material (G) is conveyed through the electronic appliance (40);
- determining a deviation between the actual frequency and the target frequency;
- automatically or automatedly adjusting the sensor signal and/or the sensitivity until a predeterminable acceptance range for the deviation is reached; the sensor signal and/or the sensitivity being adjusted by a control and/or regulation system (200) assigned to the electronic appliance (40) and/or to the distribution machine (10);
**characterized by** the step of:
- providing an adjustable electrical power supply for the at least one sensor device (50), a brightness of a light source assigned to the sensor device (50), for detecting the granular material (G), being adjustable depending on the power supply; the electrical power supply automatically increasing or decreasing until the acceptance range for the deviation is reached.

2. Method according to claim 1, **characterized in that** the sensor signal is adjusted by means of variably regulatable electronic signal amplification.

3. Agricultural distribution machine (10), in particular a precision seed drill, for spreading granular material (G), in particular seed and/or fertilizer, comprising an electronic appliance (40), for detecting granular material (G) according to any of the preceding claims 1 or 2, and an associated control and/or regulation system (200) according to any of the preceding claims 1 or 2, wherein the control and/or regulation system (200) is designed to carry out the method according to at least one of the preceding claims 1 or 2.

## Revendications

1. Procédé permettant la détection sans contact de matériau granulaire (G) à l'intérieur d'une machine de distribution agricole (10), comportant les étapes consistant à :
- transporter le matériau granulaire (G) au moyen d'une différence de pression et/ou de la gravité à travers un dispositif électronique (40) comportant au moins un dispositif capteur (50) ;
- détecter le matériau granulaire (G) au moyen de l'au moins un dispositif capteur (50) ; le dispositif capteur (50) étant conçu pour générer un signal de capteur en fonction du matériau (G) détecté et sur la base d'une sensibilité réglable pour le dispositif capteur (50) ;
- déterminer une fréquence réelle à laquelle le matériau granulaire (G) passe le dispositif électronique (40), en particulier le dispositif capteur (50), sur la base du signal de capteur,
- comparer la fréquence réelle déterminée avec une fréquence de consigne pouvant être appelée et/ou prédéterminée, à laquelle le matériau granulaire (G) est transporté à travers le dispositif électronique (40) ;
- déterminer un écart entre la fréquence réelle et la fréquence de consigne ;
- adapter de manière automatique ou automatisée le signal de capteur et/ou la sensibilité jusqu'à ce qu'une plage d'acceptation pouvant être prédéterminée soit atteinte pour l'écart ; le signal de capteur et/ou la sensibilité étant adaptés par un système de commande et/ou de régulation (200) associé au dispositif électronique (40) et/ou à la machine de distribution (10) ;
**caractérisé par** l'étape de :
- fourniture d'une alimentation en courant électrique adaptable pour l'au moins un dispositif capteur (50), une luminosité d'une source lumineuse associée au dispositif capteur (50) pour la détection du matériau granulaire (G) étant adaptable en fonction de l'alimentation en courant ; l'alimentation en courant électrique étant automatiquement augmentée ou diminuée jusqu'à ce que la plage d'acceptation pour l'écart soit atteinte.

2. Procédé selon la revendication 1, **caractérisé en ce que** le signal de capteur est adapté au moyen d'une amplification de signal électronique à réglage variable.

3. Machine de distribution agricole (10), en particulier semoir monograine, destiné à distribuer un matériau granulaire (G), en particulier des semences et/ou des engrais, comportant un dispositif électronique (40) pour la détection du matériau granulaire (G) selon l'une des revendications 1 ou 2 précitées et un système de commande et/ou de régulation (200) associé selon l'une des revendications 1 ou 2 précitées, le système de commande et/ou de régulation (200) étant conçu pour mettre en oeuvre le procédé selon au moins l'une des revendications 1 ou 2 précitées.
